# EUROPEAN PATENT APPLICATION

(11) **EP 4 468 788 A1**
(43) Date of publication of application: **27.11.2024**
(21) Application number: 23762760.9
(22) Date of filing: 20.02.2023
(51) Int. Cl.: H04W 48/16

(54) **WI-FI P2P CONNECTION METHOD, APPARATUS AND SYSTEM**

(30) Priority: 03.03.2022 CN 202210208713
(71) Applicant: Huawei Technologies Co., Ltd., Shenzhen, Guangdong 518129 (CN)
(72) Inventor: YANG, Yanwei, Shenzhen, Guangdong 518129 (CN); YOU, Jiali, Shenzhen, Guangdong 518129 (CN)
(74) Representative: Goddar, Heinz J.
(86) International application number: PCT/CN2023/077172
(87) International publication number: WO 2023/165359

(57) **Abstract**

Embodiments of this application provide a Wi-Fi P2P connection method and apparatus, and a system. This can reduce time for providing a service via a Wi-Fi P2P connection, and improve user experience. The method specifically includes: A first device determines, a probe (probe) request message. The probe request message includes service request information, and the service request information is used to request a first service. The first device sends the probe request message.

## Description

This application claims priority to Chinese Patent Application No. 202210208713.1, filed with the China National Intellectual Property Administration on March 3, 2022 and entitled "Wi-Fi P2P CONNECTION METHOD AND APPARATUS, AND SYSTEM", which is incorporated herein by reference in its entirety.

### TECHNICAL FIELD

Embodiments of this application relate to the communication field, and more specifically, to a Wi-Fi P2P connection method and apparatus, and a system.

### BACKGROUND

In Wi-Fi P2P connection communication, to implement communication between two devices, device discovery and service discovery are usually performed. To be specific, the two devices are first connected to each other to achieve a state in which the two devices can communicate with each other, and then steps such as requesting a service, providing the service, and the like, are performed. Consequently, a procedure of providing the service via a Wi-Fi P2P connection is time-consuming.

### SUMMARY

Embodiments of this application provide a Wi-Fi P2P connection method and apparatus, and a system. This can reduce time for providing a service via a Wi-Fi P2P connection, and improve user experience.

According to a first aspect, a Wi-Fi P2P connection method is provided, including: A first device determines, a probe (probe) request message. The probe request message includes service request information, and the service request information is used to request a first service. The first device sends the probe request message.

Service-related information is added to the probe request message, so that a device discovery step and a service discovery step are implemented in one message. Therefore, time for providing a service is reduced via a Wi-Fi P2P connection, a user can quickly obtain the service, and user experience is improved.

With reference to the first aspect, in some implementations of the first aspect, the first device receives a probe (probe) request response message. The probe request response message indicates to provide the first service for the first device.

According to the probe request response message, a Wi-Fi device successfully learns of a service request, to quickly provide the service. This reduces the time for providing the service via the Wi-Fi P2P connection, and improves user experience.

With reference to the first aspect, in some implementations of the first aspect, information included in the probe request message is represented by using attribute information in a Wi-Fi P2P information element.

In the foregoing implementations, the information included in the probe request message is represented by using the attribute information. This reduces a change in an information structure, improves compatibility of the method, and facilitates implementation.

With reference to the first aspect, in some implementations of the first aspect, information included in the probe request response message is represented by using the attribute information in the Wi-Fi P2P information element.

In the foregoing implementations, the information included in the probe request response message is represented by using the attribute information. Therefore, a change in an information structure is relatively small, and the compatibility of the method is improved.

With reference to the first aspect, in some implementations of the first aspect, the first service includes a service in a Bonjour manner or a service in a UPnP manner.

According to a second aspect, a Wi-Fi P2P connection method is provided, including: A second device receives a probe request message. The probe request message includes service request information, and the service request information is used to request to provide a first service. The second device determines, based on the probe request message, whether to send a probe request response message.

With reference to the second aspect, in some implementations of the second aspect, that the second device determines, based on the probe request message, whether to send a probe request response message includes: The second device determines, based on the probe request message and service providing information locally stored in the second device, whether to send the probe request response message.

With reference to the second aspect, in some implementations of the second aspect, that the second device determines, based on the probe request message and service providing information locally stored in the second device, whether to send the probe request response message includes: The second device matches the service request information included in the probe request message with the service providing information. When the matching succeeds, the second device determines to send the probe request response message. When the matching fails, the second device determines not to send the probe request response message.

With reference to the second aspect, in some implementations of the second aspect, information included in the probe request message is represented by using attribute information in a Wi-Fi P2P information element.

With reference to the second aspect, in some implementations of the second aspect, information included in the probe request response message is represented by using the attribute information in the Wi-Fi P2P information element.

With reference to the second aspect, in some implementations of the second aspect, the first service includes a service in a Bonjour manner or a service in a UPnP manner.

According to a third aspect, a Wi-Fi P2P connection apparatus is provided. The apparatus has a function of implementing the first device described in the first aspect. The function may be implemented based on hardware, or may be implemented based on hardware executing corresponding software. The hardware or the software includes one or more modules corresponding to the function. The apparatus specifically includes: a first processing module, configured to determine a probe (probe) request message, where the probe request message includes service request information, and the service request information is used to request a first service; and a first transceiver module, configured to send the probe request message.

With reference to the third aspect, in some implementations of the third aspect, the first transceiver module is further configured to receive a probe (probe) request response message. The probe request response message indicates to provide the first service for the first device.

With reference to the third aspect, in some implementations of the third aspect, information included in the probe request message is represented by using attribute information in a Wi-Fi P2P information element.

With reference to the third aspect, in some implementations of the third aspect, information included in the probe request response message is represented by using the attribute information in the Wi-Fi P2P information element.

With reference to the third aspect, in some implementations of the third aspect, the first service includes a service in a Bonjour manner or a service in a UPnP manner.

According to a fourth aspect, a Wi-Fi P2P connection apparatus is provided. The apparatus has a function of implementing the second device described in the second aspect. The function may be implemented based on hardware, or may be implemented based on hardware executing corresponding software. The hardware or the software includes one or more modules corresponding to the function. The apparatus specifically includes: a second transceiver module, configured to receive a probe (probe) request message, where the probe request message includes service request information, and the service request information is used to request to provide a first service; and a second processing module, configured to determine, based on the probe request message, whether to send a probe (probe) request response message.

With reference to the fourth aspect, in some implementations of the fourth aspect, the second processing module is configured to determine, based on the probe request message, whether to send the probe request response message. The second processing module is specifically configured to determine, based on the probe request message and service providing information locally stored in the second device, whether to send the probe request response message.

With reference to the fourth aspect, in some implementations of the fourth aspect, the second processing module determines, based on the probe request message and the service providing information locally stored in the second device, whether to send the probe request response message. The second processing module is specifically configured to: match the service request information included in the probe request message with the service providing information; when the matching succeeds, determine to send the probe request response message; or when the matching fails, determine not to send the probe request response message.

With reference to the fourth aspect, in some implementations of the fourth aspect, information included in the probe request message is represented by using attribute information in a Wi-Fi P2P information element.

With reference to the fourth aspect, in some implementations of the fourth aspect, information included in the probe request response message is represented by using the attribute information in the Wi-Fi P2P information element.

With reference to the fourth aspect, in some implementations of the fourth aspect, the first service includes a service in a Bonjour manner or a service in a UPnP manner.

According to a fifth aspect, a communication system is provided. The communication system includes a first device and a second device. The first device is configured to perform the method according to any one of the first aspect or the implementations of the first aspect. The second device is configured to perform the method according to any one of the second aspect or the implementations of the second aspect.

According to a sixth aspect, a Wi-Fi P2P connection apparatus is provided, including at least one processor. The at least one processor is coupled to at least one memory. The at least one processor is configured to execute a computer program or instructions stored in the at least one memory, to enable the apparatus to perform the method according to any one of the first aspect or the implementations of the first aspect, or enable the apparatus to perform the method according to any one of the second aspect or the implementations of the second aspect.

According to a seventh aspect, a chip is provided, including a processor and a communication interface. The communication interface is configured to receive data and/or information, and transmit the received data and/or information to the processor. The processor processes the data and/or information based on the method according to any one of the first aspect or the implementations of the first aspect, or the processor processes the data and/or information based on the method according to any one of the second aspect or the implementations of the second aspect.

According to an eighth aspect, a computer-readable medium is provided. The computer-readable medium stores program code. When the computer program code is run on a computer, the computer is enabled to perform the method according to any one of the first aspect or the possible implementations of the first aspect, or the computer is enabled to perform the method according to any one of the second aspect or the possible implementations of the second aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to a ninth aspect, a computer program product is provided. The computer program product includes computer program code. When the computer program code is run on a computer, the computer is enabled to perform the method according to any one of the first aspect or the possible implementations of the first aspect, or the computer is enabled to perform the method according to any one of the first aspect or the possible implementations of the first aspect.

### BRIEF DESCRIPTION OF DRAWINGS

FIG. 1 is a diagram of a P2P architecture of Wi-Fi P2P to which an embodiment of this application is applicable;
FIG. 2 is a schematic flowchart of a Wi-Fi P2P connection method 200 according to an embodiment of this application;
FIG. 3 is a schematic flowchart of an example of a Wi-Fi P2P connection method 300 according to an embodiment of this application;
FIG. 4 is a schematic flowchart of another Wi-Fi P2P connection method according to an embodiment of this application;
FIG. 5 is a schematic diagram of a structure of a Wi-Fi P2P connection apparatus 500 according to an embodiment of this application;
FIG. 6 is a schematic diagram of a structure of another Wi-Fi P2P connection apparatus 600 according to an embodiment of this application;
FIG. 7 is a schematic diagram of a hardware structure of a Wi-Fi P2P connection apparatus 1000 according to an embodiment of this application; and
FIG. 8 is a schematic diagram of a structure of a communication system 1100 according to an embodiment of this application.

### DESCRIPTION OF EMBODIMENTS

The following describes technical solutions of embodiments in this application with reference to accompanying drawings.

Wi-Fi direct communication (Wi-Fi peer to peer, Wi-Fi P2P) may also be referred to as Wi-Fi Direct, and supports direct connection and communication between two Wi-Fi devices without an access point (access point, AP). Compared with a Bluetooth technology, the Wi-Fi P2P has a larger connection range and is widely used.

The Wi-Fi device in embodiments of this application may be user equipment, an access terminal, a subscriber unit, a subscriber station, a mobile station, a remote station, a remote terminal, a mobile device, a user terminal, a terminal, a wireless communication device, a user agent, a user apparatus, or the like. Alternatively, the Wi-Fi device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5th generation (5th Generation, 5G) network, a terminal device in a future evolved public land mobile communication network (Public Land Mobile Network, PLMN), or the like. The Wi-Fi device may alternatively be a media device such as a smart television, a set-top box, an augmented reality/virtual reality (augmented reality/virtual reality, AR/VR), or the like. This is not limited in embodiments of this application.

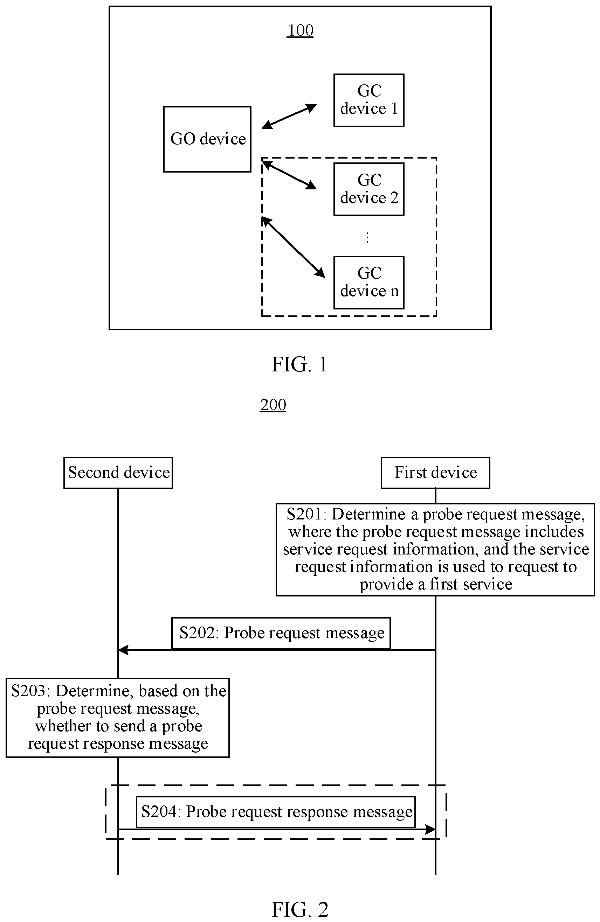

FIG. 1 is a diagram of a P2P architecture of Wi-Fi P2P to which an embodiment of this application is applicable. As shown in FIG. 1, a P2P architecture 100 includes: (1) a Wi-Fi device that provides a service in the P2P architecture: a group owner (Group Owner, GO) device; and (2) a Wi-Fi device that requests or entrusts a service in the P2P architecture: a group client (Group Client, GC) device. There may be one or more GC devices, for example, a GC device 1, a GC device 2, ..., and a GC device n in FIG. 1. The GO device and the GC device may be communicated with each other via a Wi-Fi P2P connection. In other words, the communication is implemented via the Wi-Fi P2P connection, so that the GO device may provide the service for one or more GC devices. Therefore, functions such as file transfer, screen sharing, online games, and the like can be implemented between the GO device and the GC device by using the P2P architecture.

Embodiments of this application provide a Wi-Fi P2P connection method. This can reduce time for providing a service via a Wi-Fi P2P connection, and improve user experience.

FIG. 2 is a schematic flowchart of a Wi-Fi P2P connection method 200 according to an embodiment of this application. As described in FIG. 2, the method 200 includes the following steps.

S201: A first device determines a probe request message (probe request). The probe request message includes service request information, and the service request information is used to request to provide a first service.

It should be understood that the first device may be a GC device. In other words, the first device requests another device to provide a service for the first device. The another device may be a second device, and the second device may be a GO device. For example, the first device is a mobile phone, the second device is a television, and the mobile phone may request to share a screen with the television.

Specifically, in this embodiment of this application, the first device may add the service request information to the probe request message. The service request information is used to request the second device to provide the first service for the first device.

S202: The first device sends the probe request message. Correspondingly, the second device receives the probe request message.

Specifically, in this embodiment of this application, a manner in which the first device sends the probe request message may be that the first device sends the probe request message in a Wi-Fi P2P broadcast form.

S203: The second device determines, based on the probe request message, whether to send a probe request response message (probe response).

Specifically, in this embodiment of this application, after receiving the probe request message, the second device may parse the probe request message to obtain the service request information. Then, the second device determines, based on the service request information and service providing information locally stored in the second device, whether to send the probe request response message.

Therefore, in the foregoing method for providing the service for a Wi-Fi device by adding the service request information to the probe request message, two steps of device discovery and service discovery for providing the service via a Wi-Fi P2P connection are compressed to one step. The device discovery and the service discovery are implemented in one message at the same time. This can reduce time for providing the service via the Wi-Fi P2P connection, and a user can quickly obtain the service. Therefore, user experience is improved.

In a possible implementation, the second device may match the service request information with the locally stored service providing information. If the matching succeeds, the second device adds the service providing information to the probe request response message, and sends the probe request response message to the first device. If the matching fails, the second device does not send the probe request response message to the first device. In other words, the second device does not respond to a service request of the first device.

It should be understood that, a specific manner of matching the service request information with the service providing information may be that a service identifier included in the service request information is compared with a service identifier included in the service providing information. If two same service identifiers exist, the matching succeeds. If two same service identifiers do not exist, the matching fails.

In a possible implementation, information included in the foregoing probe request message and information included in the probe request response message may be represented by using attribute (attribute) information in a Wi-Fi P2P information element (information element, IE). Specifically, mapping may be performed based on a format in the following Table 1. In other words, Table 1 is a frame format mapping table of the attribute information of the information included in the probe request message or the probe request response message.

**Table 1**

| Information field (Field) | Information size (byte) Size (octets) | Information value (Value) | Description (Description) |
|---|---|---|---|
| Attribute ID | 1 | Variable (Variable) | Indicates attribute identity document (identity document, ID). |
| Length | 2 | Variable (Variable) | Indicates lengths of the following fields in the attribute information. |
| Attribute Type | 1 | 0 or 1 | 0 indicates that the message is the probe request message, and the probe request message carries the service request information; and |
| | | | 1 indicates that the message is the probe request response message, and the probe request response message carries the service providing information. |
| Attribute Data | Variable (Variable) | Variable (Variable) | Indicates specific content of the information included in the message. |

For content of the Attribute Data field in Table 1, when a bit value in the Attribute Type is 0 or 1, the content of the Attribute Data field is different. When the bit value is 0, it indicates that the message is the probe request message, and the message carries the service request information. Specifically, a format of the service request information may be content in the following Table 2. In other words, Table 2 is a frame format mapping table of the service request information. When the bit value is 1, it indicates that the message is the probe request response message, and the message carries the service providing information. Specifically, a format of the service providing information may be content in the following Table 4. In other words, Table 4 is a frame format mapping table of the service providing information.

**Table 2**

| Information field (Field) | Information size (byte) Size (octets) | Information value (Value) | Description (Description) |
|---|---|---|---|
| Service Type | 1 | Variable (Variable) | 0 indicates all service types; |
| | | | 1 indicates bonjour; |
| | | | 2 indicates UPnP; and |
| | | | 3-255 indicates a user-defined service type. |
| Service Length | 2 | Variable (Variable) | Indicates a field length of the service request information. |
| Service | Variable (Variable) | Variable (Variable) | Indicates a requested service name, and supports wildcard matching. |

In Table 2, when the Service Type field is 0, it indicates to request all service lists. In this case, the Service Length field is 0, and the Service field has no content. In other words, the Service field is blank.

In Table 2, when the Service Type field is 1, it indicates to request a service in a bonjour manner, and the Service field is a name of a domain name server (domain name system, DNS). It should be understood that the service in the bonjour manner is a name created by Apple for an open zero-configuration network standard based on a multicast domain name service (multicast DNS).

In Table 2, when the Service Type field is 2, it indicates to request a service in a universal plug and play (universal plug and play, UPnP) manner, and the Service field is a search target (search target, ST) header of a simple service discovery protocol (simple service discovery protocol, SSDP) SSDP discovery request. For the service in a UPnP format, there is a plurality of service names. In other words, for content of the Service field, refer to Table 3.

**Table 3**

| Service value | Syntax description |
|---|---|
| ssdp:all | Searches for all UPnP devices and services |
| | Indicates to search for all devices and services. |
| UPnP: rootdevice | Searches for all UPnP root devices |
| | Indicates to merely search for a root device on the network. |
| uuid:device-uuid | Searches for a particular device |
| | Indicates to query a device identified by a UUID. |
| urn: schemas-UPnP-org: device: deviceType:ver | Searches for devices of the given type |
| | Indicates to query a device type specified by a device-Type field, where the device type and a version are defined by a UPNP organization. |
| urn:domain-name:device:deviceType:ver | Searches for devices with a vendor-specific type |
| | Indicates to query the device type specified by the device-Type field, where the device type and the version are defined by the UPNP organization. |
| urn: schemas-UPnP-org: service: serviceType :ver | Searches for devices containing a service of the given type |
| | Indicates to query a service type specified by a service-Type field, where the service type and a version are defined by the UPNP organization. |
| urn:domain-name: service:serviceType:ver | Searches for devices containing a vendor-specific service |
| | Indicates to query the service type specified by the service-Type field, where the service type and the version are defined by the UPNP organization. |

In the foregoing Table 2, when the Service Type field is 3-255, it indicates a user-defined service type, and the content of the Service field is user-defined.

**Table 4**

| Information field (Field) | Information size (byte) Size (octets) | Information value (Value) | Description (Description) |
|---|---|---|---|
| Service ID | 4 | 0x00000000-0xFFFFFFFF | Indicates a service ID of a local service. |
| Service Type | 1 | Variable (Variable) | 1 indicates bonjour; |
| | | | 2 indicates UPnP; and |
| | | | 3-255 indicates a user-defined service type. |
| Service protocol | 1 | Variable (Variable) | 0 indicates the TCP protocol; |
| | | | 1 indicates the UDP protocol; |
| | | | 2 indicates the VTP protocol; and |
| | | | 3 indicates the QUIC protocol. |
| Service Data Length | 1 | Variable (Variable) | Indicates a length of a Service Data field. |
| Service Data | Variable (Variable) | Variable (Variable) | Indicates service data that is provided. |

In the foregoing Table 4, when the Service Type field is 1, it indicates to respond to the requested service in the bonjour manner. In this case, a content format of the Service Data field is shown in Table 5.

**Table 5**

| Information field (Field) | Information size (byte) Size (octets) | Information value (Value) |
|---|---|---|
| DNS Type | 2 | Indicates 12 PTR (PTR => Pointer) and 16 TXT (TXT =>Text). |
| Length | 1 | Indicates 1. |
| Value | Variable (Variable) | Indicates, for example, (example): MyPrinter_ipp._tcp.local.(PTR) txtvers= 1,port=666(TXT). |

In the foregoing Table 4, when the Service Type field is 2, it indicates to respond to a service in a UPnP manner. In this case, the content of the Service Data field is a USN header of a simple service discovery protocol (simple service discovery protocol, SSDP) SSDP response message.

In the foregoing Table 4, when the Service Type field is 3-255, it indicates user-defined service data.

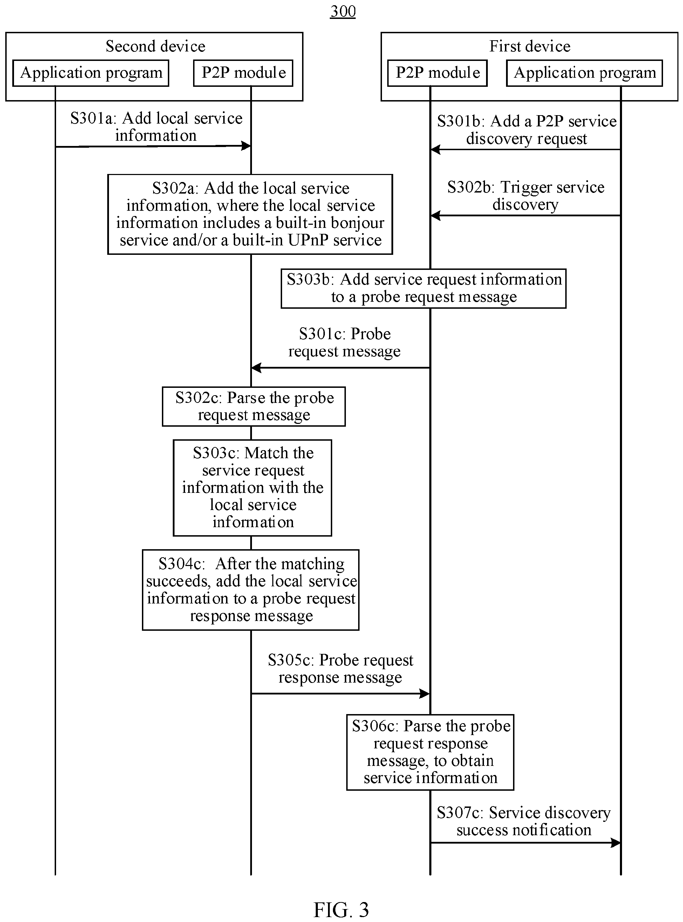

To describe an implementation of the method 200 more clearly, FIG. 3 is a schematic flowchart of an example of a Wi-Fi P2P connection method 300 according to an embodiment of this application.

It should be noted that some steps in the method 300 shown in FIG. 3 are the same as those in the method 200 shown in FIG. 2. Details are not described herein again. For example, steps S303b, S301c, S302c to S305c, and S306c in FIG. 3 are respectively the same as steps S201, S202, S203, and S204 in FIG. 2. Details are not described herein again.

Specifically, the method 300 includes S301a and S302a (which are operations performed by a second device before interaction between a first device and the second device), S301b to S303b (which are operations performed by the first device before the interaction between the first device and the second device), and S301c to S307c (which are operations performed during and after the interaction between the first device and the second device).

In S301a and S302a:
Step S301a: In a second device, an application program indicates a P2P module to add local service information in the second device.

Specifically, in this embodiment of this application, the local service information may be understood as information about a P2P service that may be provided by the device. Optionally, the local service information may be replaced with P2P service information.

Step S302a: The P2P module adds the local service information in the second device, where the local service information includes a built-in Bonjour service and/or a built-in UPnP service.

Specifically, in this embodiment of this application, the foregoing steps enable the P2P module of the second device to store the local service information. Optionally, the local service information is local service providing information, in other words, service information provided locally.

In S301b to S303b:
Step S301b: In a first device, an application program indicates a P2P module to add a P2P service discovery request in the first device.

Step S302b: The application program triggers service discovery in the first device.

Specifically, in this embodiment of this application, the foregoing steps trigger a service discovery step. It may be understood that, in this case, the first device enters a state of performing service discovery.

Step S303b: The P2P module generates a probe request message in the first device, and the probe request message includes service request information.

Specifically, in this embodiment of this application, after the service discovery is triggered, the P2P module integrates the service request information with other information to generate the probe request message, and the probe request message includes the service request information.

In S301c to S307c:
Step S301c: The P2P module of the first device sends the probe request message to the P2P module of the second device. The probe request message includes the service request information. Correspondingly, the second device receives the probe request message.

Step S302c: The P2P module of the second device parses the probe request message.

Specifically, in this embodiment of this application, the second device may obtain the service request information by parsing the probe request message.

Step S303c: The P2P module of the second device matches the service request information with the local service information.

Step S304c: After the matching succeeds, the P2P module of the second device adds the local service information to a probe request response message.

For detailed descriptions of S303c and S304c of the foregoing method, refer to step S203 in the foregoing method 200. Details are not described herein again.

Step S305c: The P2P module of the second device sends the probe request response message to the P2P module of the first device. Correspondingly, the P2P module of the first device receives the probe request response message.

Step S306c: The P2P module of the first device parses the probe request response message, to obtain service information.

Specifically, in this embodiment of this application, the service information may be information that indicates the service is successfully requested.

Step S307c: The P2P module of the first device sends a service discovery success notification to the application program of the first device.

Specifically, in this embodiment of this application, the service discovery success notification is used by the P2P module to indicate that the application program successfully requests the service.

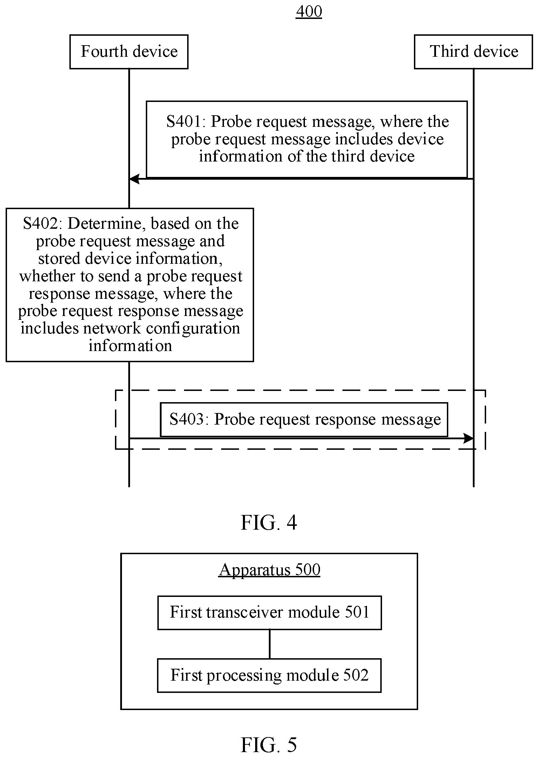

In addition, FIG. 4 is a schematic flowchart of another Wi-Fi P2P connection method according to an embodiment of this application. It should be understood that a Wi-Fi device needs to be connected to a router (a Wi-Fi hotspot or a wireless access point access point AP) to access the internet, and implement data reporting and remote control. Usually, a process in which the Wi-Fi device obtains a name and a password of the Wi-Fi hotspot is referred to as device network configuration. Therefore, the another Wi-Fi P2P connection method according to this embodiment of this application may be understood as that a probe request message (probe request) and a probe request response message (probe response) in a Wi-Fi P2P connection are used in a device network configuration procedure. Specifically, when the probe message is used for device network configuration, the Wi-Fi P2P connection method 400 includes the following steps.

Step S401: A third device sends a probe request message. The probe request message includes device information of the third device. Correspondingly, a fourth device receives the probe request message.

It should be understood that the third device and the fourth device each may be a Wi-Fi device. For example, the third device may be a Wi-Fi device that needs another device to assist in implementing network configuration, such as a smart speaker, a smart television, or the like, and the fourth device may be a Wi-Fi device that can be used to assist another device in implementing network configuration, such as a mobile phone or the like. This is not limited in this application.

Step S402: The fourth device determines, based on the probe request message and device information stored in the fourth device, whether to send a probe request response message to the third device. The probe request response message includes network configuration information.

Specifically, in this embodiment of this application, the fourth device matches the device information of the third device in the probe request message with the device information stored in the fourth device. If the matching succeeds, the fourth device sends the probe request response message to the third device. If the matching fails, the fourth device does not send the probe request response message, in other words, does not respond to the probe request message.

Optionally, the network configuration information includes a service set identifier (service set identifier, SSID), a password (password), and a registration code of the router.

With reference to FIG. 1 to FIG. 4, the foregoing describes in detail the Wi-Fi P2P connection methods to which embodiments of this application is applicable. With reference to FIG. 5 to FIG. 8, the following describes in detail data transmission apparatuses and a system provided in embodiments of this application. It should be understood that descriptions of apparatus and system embodiments correspond to the descriptions of the method embodiments. Therefore, for content that is not described in detail, refer to the foregoing method embodiments. For brevity, details are not described herein again.

FIG. 5 is a schematic diagram of a structure of a Wi-Fi P2P connection apparatus 500 according to an embodiment of this application. The apparatus 500 shown in FIG. 5 may perform corresponding steps performed by the first device in the foregoing method embodiments.

As shown in FIG. 5, the apparatus 500 may include a first transceiver module 501 and a first processing module 502. The first transceiver module 501 and the first processing module 502 may be configured to perform related steps of the first device in the foregoing method 200 or 300. For details about these steps, refer to the related steps in the foregoing descriptions. Details are not described herein again.

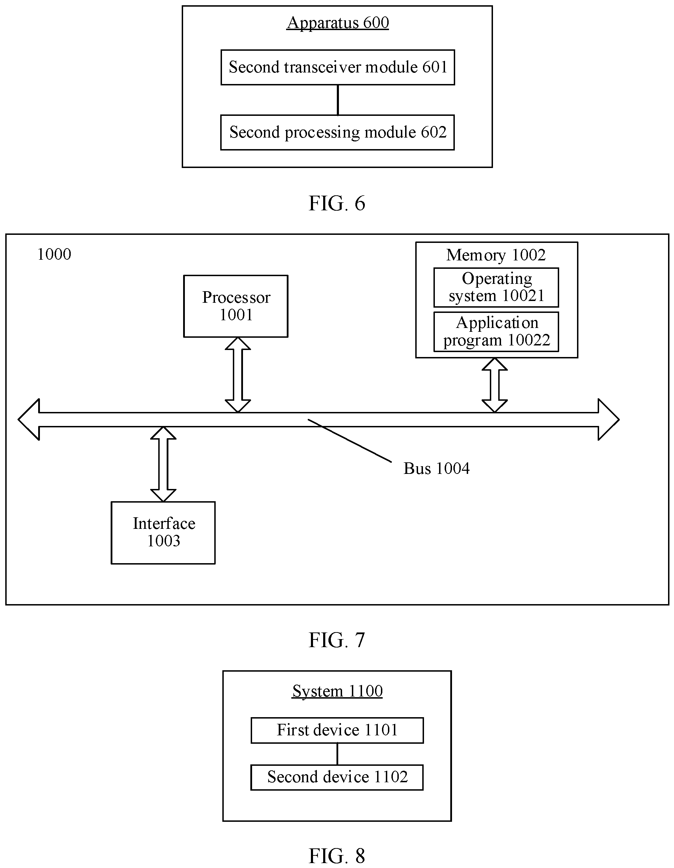

FIG. 6 is a schematic diagram of a structure of another Wi-Fi P2P connection apparatus 600 according to an embodiment of this application. The apparatus 600 shown in FIG. 6 may perform corresponding steps performed by the second device in the foregoing method embodiments.

As shown in FIG. 6, the apparatus 600 may include a first transceiver module 601 and a first processing module 602. The first transceiver module 601 and the first processing module 602 may be configured to perform related steps of the second device in the foregoing method 200 or 300. For details about these steps, refer to the related steps in the foregoing descriptions. Details are not described herein again.

It should be understood that the apparatus 500 or 600 in this embodiment of this application may be implemented by using a central processing unit (central processing unit, CPU), an application-specific integrated circuit (application-specific integrated circuit, ASIC), or a programmable logic device (programmable logic device, PLD). The PLD may be a complex programmable logic device (complex programmable logic device, CPLD), a field programmable array gate (field-programmable array gate, FPGA), a general array logic (generic array logic, GAL), or any combination thereof. Alternatively, when the Wi-Fi P2P connection methods shown in FIG. 1 to FIG. 4 may be implemented by using software, the apparatus 500 or 600 and the modules thereof may be software modules.

FIG. 7 is a schematic diagram of a hardware structure of a Wi-Fi P2P connection apparatus 1000 according to an embodiment of this application.

As shown in FIG. 7, the Wi-Fi P2P connection apparatus 1000 includes a processor 1001, a memory 1002, an interface 1003, and a bus 1004. The interface 1003 may be implemented in a wireless or wired manner, and may be specifically a network adapter. The processor 1001, the memory 1002, and the interface 1003 are connected through the bus 1004. The interface 1003 may specifically include a transmitter and a receiver, and is used by the Wi-Fi P2P connection apparatus to implement the foregoing receiving and sending. The processor 1001 is configured to perform processing performed by the Wi-Fi P2P connection apparatus in the foregoing embodiments. The memory 1002 includes an operating system 10021 and an application program 10022, and is configured to store a program, code, or instructions. When executing the program, the code, or the instructions, the processor or a hardware device may complete a processing process in the foregoing method embodiments. Optionally, the memory 1002 may include a read-only memory (read-only memory, ROM) and a random access memory (random access memory, RAM). The ROM includes a basic input/output system (basic input/output system, BIOS) or an embedded system, and the RAM includes an application program and an operating system. When the Wi-Fi P2P connection apparatus 1000 needs to run, the Wi-Fi P2P connection apparatus is started by using a BIOS built into the ROM or a bootloader in an embedded system, to boot the Wi-Fi P2P connection apparatus 1000 to enter a normal running state. After entering the normal running state, the Wi-Fi P2P connection apparatus 1000 runs the application program and the operating system in the RAM, to complete a processing process related to the Wi-Fi P2P connection apparatus 1000 in the method embodiments. FIG. 7 merely shows a simplified design of the Wi-Fi P2P connection apparatus 1000. During actual application, the Wi-Fi P2P connection apparatus may include any quantity of interfaces, processors, or memories.

Optionally, in some implementations, the Wi-Fi P2P connection apparatus 1000 may be a schematic diagram of a hardware structure of the foregoing Wi-Fi P2P connection apparatus 500 or 600. In this case, the processor 1001 has a same function as the first processing module 502 or the second processing module 602. The interface 1003 has a same function as the first transceiver module 501 or the second transceiver module 601.

FIG. 8 is a schematic diagram of a structure of a communication system 1100 according to an embodiment of this application. As shown in FIG. 8, the communication system 1100 may include a first device 1101 and a second device 1102.

An embodiment of this application further provides a computer-readable medium. The computer-readable medium stores program code. When the computer program code is run on a computer, the computer is enabled to perform the method performed by the first device or the second device in the foregoing method embodiments. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a chip system. The chip system includes at least one processor, at least one memory, and an interface circuit. The interface circuit is responsible for information exchange between the chip system and the outside. The at least one memory, the interface circuit, and the at least one processor are interconnected through a line. The at least one memory stores instructions. The instructions are executed by the at least one processor, to perform an operation related to the first device or the second device in the methods in the foregoing aspects. In a specific implementation process, the chip system may be implemented in a form of a central processing unit (central processing unit, CPU), a micro controller unit (micro controller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer program product, used in a first device or a second device. The computer program product includes a series of instructions. When the instructions are run, an operation of the first device or the second device in the methods in the foregoing aspects are performed.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application running on a computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions, so that one computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A Wi-Fi P2P connection method, comprising:
determining, by a first device, a probe probe request message, wherein the probe request message comprises service request information, and the service request information is used to request a first service; and
sending, by the first device, the probe request message.

2. The method according to claim 1, wherein the method further comprises:
receiving, by the first device, a probe probe request response message, wherein the probe request response message indicates to provide the first service for the first device.

3. The method according to claim 1 or 2, wherein information comprised in the probe request message is represented by using attribute information in a Wi-Fi P2P information element.

4. The method according to claim 2 or 3, wherein information comprised in the probe request response message is represented by using the attribute information in the Wi-Fi P2P information element.

5. The method according to any one of claims 1 to 4, wherein the first service comprises a service in a Bonjour manner or a service in a UPnP manner.

6. A Wi-Fi P2P connection method, comprising:
receiving, by a second device, a probe probe request message, wherein the probe request message comprises service request information, and the service request information is used to request to provide a first service; and
determining, by the second device based on the probe request message, whether to send a probe probe request response message.

7. The method according to claim 6, wherein the determining, by the second device based on the probe request message, whether to send a probe request response message comprises:
determining, by the second device based on the probe request message and service providing information locally stored in the second device, whether to send the probe request response message.

8. The method according to claim 7, wherein the determining, by the second device based on the probe request message and service providing information locally stored in the second device, whether to send the probe request response message comprises:
matching, by the second device, the service request information comprised in the probe request message with the service providing information; and
when the matching succeeds, determining, by the second device, to send the probe request response message; or
when the matching fails, determining, by the second device, not to send the probe request response message.

9. The method according to any one of claims 6 to 8, wherein information comprised in the probe request message is represented by using attribute information in a Wi-Fi P2P information element.

10. The method according to any one of claims 6 to 9, wherein information comprised in the probe request response message is represented by using the attribute information in the Wi-Fi P2P information element.

11. The method according to any one of claims 6 to 10, wherein the first service comprises a service in a Bonjour manner or a service in a UPnP manner.

12. A Wi-Fi P2P connection apparatus, comprising:
a first processing module, configured to determine a probe probe request message, wherein the probe request message comprises service request information, and the service request information is used to request a first service; and
a first transceiver module, configured to send the probe request message.

13. The apparatus according to claim 12, wherein the first transceiver module is further configured to receive a probe probe request response message, wherein the probe request response message indicates to provide the first service for a first device.

14. The apparatus according to claim 12 or 13, wherein information comprised in the probe request message is represented by using attribute information in a Wi-Fi P2P information element.

15. The apparatus according to claim 13 or 14, wherein information comprised in the probe request response message is represented by using the attribute information in the Wi-Fi P2P information element.

16. The apparatus according to any one of claims 12 to 15, wherein the first service comprises a service in a Bonjour manner or a service in a UPnP manner.

17. A Wi-Fi P2P connection apparatus, comprising:
a second transceiver module, configured to receive a probe probe request message, wherein the probe request message comprises service request information, and the service request information is used to request to provide a first service; and
a second processing module, configured to determine, based on the probe request message, whether to send a probe probe request response message.

18. The apparatus according to claim 17, wherein the second processing module is configured to determine, based on the probe request message, whether to send the probe request response message, and the second processing module is specifically configured to:
determine, based on the probe request message and service providing information locally stored in the second device, whether to send the probe request response message.

19. The apparatus according to claim 18, wherein the second processing module determines, based on the probe request message and the service providing information locally stored in the second device, whether to send the probe request response message, and the second processing module is specifically configured to:
match the service request information comprised in the probe request message with the service providing information; and
when the matching succeeds, determine to send the probe request response message; or
when the matching fails, determine not to send the probe request response message.

20. The apparatus according to any one of claims 17 to 19, wherein information comprised in the probe request message is represented by using attribute information in a Wi-Fi P2P information element.

21. The apparatus according to any one of claims 17 to 20, wherein information comprised in the probe request response message is represented by using the attribute information in the Wi-Fi P2P information element.

22. The apparatus according to any one of claims 17 to 21, wherein the first service comprises a service in a Bonjour manner or a service in a UPnP manner.

23. A communication system, wherein the communication system comprises a first device and a second device, the first device is configured to perform the method according to any one of claims 1 to 5, and the second device is configured to perform the method according to any one of claims 6 to 11.

24. A Wi-Fi P2P connection apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 5, or perform the method according to any one of claims 6 to 11.

25. A chip, comprising a processor and a communication interface, wherein the communication interface is configured to receive data and/or information, and transmit the received data and/or information to the processor; and the processor processes the data and/or information based on the method according to any one of claims 1 to 5, or the processor processes the data and/or information based on the method according to any one of claims 6 to 11.

26. A computer-readable storage medium, wherein the computer-readable storage medium stores computer instructions; and when the computer instructions are run on a computer, the method according to any one of claims 1 to 5 is implemented, or the method according to any one of claims 6 to 11 is implemented.

27. A computer program product, wherein the computer program product comprises computer program code; and when the computer program code is run on a computer, the method according to any one of claims 1 to 5 is implemented, or the method according to any one of claims 6 to 11 is implemented.
